# EUROPEAN PATENT SPECIFICATION

(11) **EP 4 520 591 B1**
(45) Date of publication and mention of the grant of the patent: **21.10.2026**
(21) Application number: 24196754.6
(22) Date of filing: 27.08.2024
(51) Int. Cl.: B60P 7/08, F16G 3/00

(54) **MULTI-ATTACHMENT LEVER BINDER**
HEBELBINDER MIT MEHREREN BEFESTIGUNGEN
CLASSEUR À LEVIER À FIXATIONS MULTIPLES

(30) Priority: 28.08.2023 US 202318238982
(43) Date of publication of application: 12.03.2025
(73) Proprietor: Columbus McKinnon Corporation (a New York corporation), Getzville, NY 14068 (US)
(72) Inventor: Wells Jr, William P, Ider, AL 35981 (US)
(74) Representative: Forresters IP LLP

(56) References cited:
- US-A- 3 265 356
- US-A- 4 280 432

## Description

### TECHNICAL FIELD

The present invention relates generally to the field of material handling, and more particularly to a mechanical device used to tighten and secure bindings such as a link chain being used to stabilize and secure heavy cargo or equipment on a cargo carrying vehicle or vessel including, but not limited to, trucks, trains, planes, and ships. A lever binder is one type of mechanical device for the above purpose that applies an over-center movement and stores kinetic energy in its handle.

### BACKGROUND ART

Lever binders are known and may be used to bring together links of a chain to tighten the chain to bind a load. A lever binder includes a binder body or a yoke with a first hook connected at one end. The binder body is pivotally connected to a lever or handle at a first pivot point. A second hook is connected to a linkage that is pivotally connected to the lever at a second pivot point. The second pivot point is adapted to move in an arc centered about the first pivot point as the lever is moved from an open or extended position to a binding position.

US 3 265 356 A discloses a chain tightener device for applying leverage and tensile forces to tighten chains.

What is needed is an improved design for a lever binder.

### BRIEF SUMMARY OF THE INVENTION

With parenthetical reference to the corresponding parts, portions or surfaces of the disclosed embodiment, merely for the purposes of illustration and not by way of limitation, the present invention meets the above described need by providing a multi-attachment lever binder according to claim 1. The disclosure provides a multi-attachment lever binder (6) with a lever (10) having a first end (11) configured to provide a handle (7) and a second end (12) disposed opposite the first end (11). The lever (10) may have a first pair of trunnions (70, 73) extending from opposite sides of the lever (10) toward the second end (12). The lever (10) also has a second pair of trunnions (76, 79) extending from opposite sides of the lever (10) disposed in spaced apart relation to the first pair of trunnions (70, 73). The first trunnions (70, 73) may be provided with a cylindrical body portion (71, 72) and a cap (74, 75) that has a diameter that is greater than the diameter of the cylindrical body portion (71, 72). The second trunnions (76, 79) may be provided with a cylindrical portion (77, 78) and a cap (80, 81) that has a diameter that is greater than the diameter of the cylindrical body portion (77, 78).

A first bifurcated arm (13) has a first end (19) and a second end (22) disposed opposite from the first end (19). The first bifurcated arm (13) has a pair of arm members (49, 52). Each arm member (49, 52) has an opening (55, 58) at the first end (19) configured to mount on one of the trunnions (70, 73) on the lever (10) to form a first pivot point (25) where the first bifurcated arm (13) attaches to the lever (10). The arm members (49, 52) are configured to attach at the second end (22) to form a cavity (29) configured to receive a stud (61) on a connection device (28, 43). The pair of arm members (49, 52) may coalesce to form a unitary structure in the form of the first bifurcated arm (13). The pair of arm members (49, 52) are curved or have an angle between the first end (19) and the second end (22). The bifurcated arm (13) may be provided with an interlocking feature whereby a tab (14) on one arm member (52) fits into an opening or recess (15) on the opposed arm member (49). A tab (17) may also be provided on arm member (49) to fit into a recess (18) on the opposed arm member (52). In this manner, the arm members (49, 52) may be interlocked for increased strength.

A second bifurcated arm (16) has a first end (34) and a second end (37) disposed opposite from the first end (34). The second bifurcated arm (16) is curved between the first end (34) and the second end (37). The arm (16) has a pair of arm members (82, 85). Each arm member (82, 85) has an opening (93,96) at the first end (34) configured to mount on one of the trunnions (76, 79) on the lever (10) to form a second pivot point (40) where the second bifurcated arm (16) attaches to the lever (10). The arm members (82, 85) are configured to attach at the second end (37) to form a cavity (29) configured to receive stud (61) of a connection device (43). The pair of arm members (82, 85) may coalesce to form a unitary structure in the form of the second bifurcated arm (16). The pair of arm members (82, 85) are curved or have an angle between the first end (34) and the second end (37). The second bifurcated arm (16) may also be provided with interlocks as described above in connection with the first bifurcated arm (13).

The second pivot point (40) is configured to move in an arc centered about the first pivot point (25) as the lever (10) is moved from an open position to a binding position.

### BRIEF DESCRIPTION OF THE DRAWINGS

FIG. 1 is a side elevation view of the lever binder of the present invention in the closed/binding position.
FIG. 2 is a perspective view of one of the bifurcated arms of the lever binder of the present invention.
FIG. 3 is an exploded view of the lever binder shown in FIG. 1.
FIG. 4 is a top plan view of the lever.
FIG. 5 is a side perspective view of the lever binder shown in the open position.

### DESCRIPTION OF THE PREFERRED EMBODIMENTS

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., cross-hatching, arrangement of parts, proportion, debris, etc.) together with the specification, and are to be considered a portion of the entire written description of this invention. As used in the following description, the terms "horizontal", "vertical", "left", "right", "up" and "down", as well as adjectival and adverbial derivatives thereof, (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or of rotation, as appropriate.

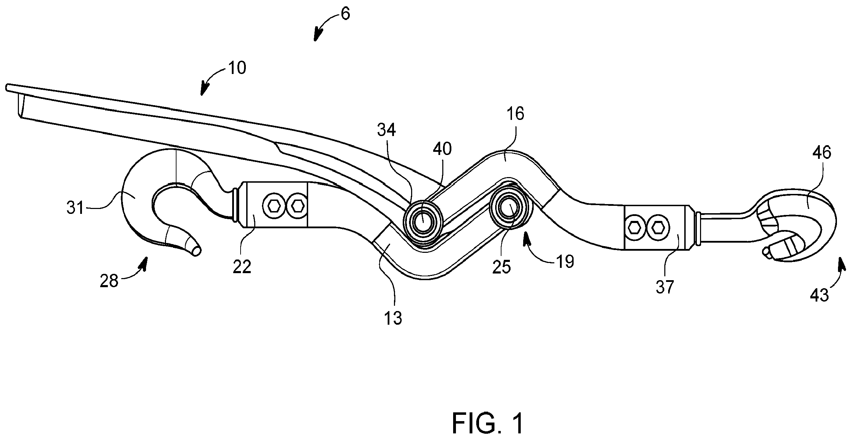

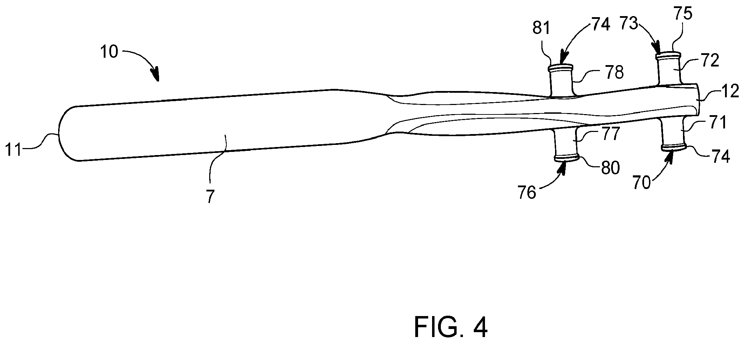

Referring now to FIGS. 1-5 of the drawings generally and initially to FIG. 1, one embodiment of the multi-attachment lever binder 6 of the present invention is shown in the closed or binding position. The multi-attachment lever binder 6 includes a lever 10 having a first bifurcated arm 13 and a second bifurcated arm 16 mounted on the lever 10, as will be described in detail herein. The first bifurcated arm 13 has a first end 19 and a second end 22 disposed opposite therefrom. The first bifurcated arm 13 is curved between the first end 19 and the second end 22. Alternatively, the first bifurcated arm 13 may be angled between the first end 19 and the second end 22. A first pivot point 25 is provided near the first end 19 of the first bifurcated arm 13. The second end 22 is configured to receive a connection device 28 such as a hook 31. Other connection devices such as eyelets, chains, or other devices may also be substituted as described herein and as will be evident to persons of ordinary skill in the art based on this disclosure.

The second bifurcated arm 16 has a first end 34 and a second end 37 disposed opposite from the first end 34. The second bifurcated arm 16 is curved between the first end 34 and the second end 37. Alternatively, the second bifurcated arm 16 may be angled between the first end 34 and the second end 37. A second pivot point 40 is provided near the first end 34 of the second bifurcated arm 16. The second end 37 is configured to receive a connection device 43 which may include a hook 46 or other connection device 43 as described herein.

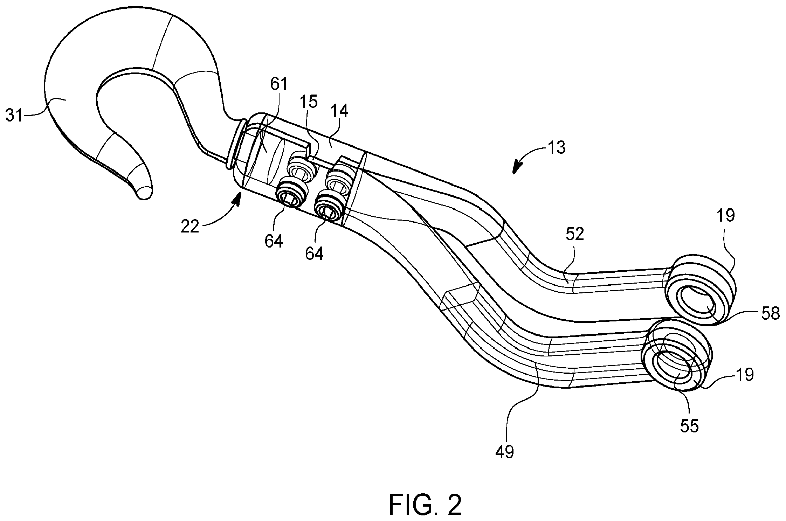

Turning to FIG. 2, the first bifurcated arm 13 is shown in greater detail. The first bifurcated arm 13 may be comprised of a pair of arm members 49, 52. Each arm member 49, 52 has an opening 55, 58 near the first end 19. The opening 55, 58 is configured to mount on the lever 10 as described below. When mounted on the lever 10 at the first end 19, the arm members 49, 52 are disposed in spaced apart relation on opposite sides of the lever 10.

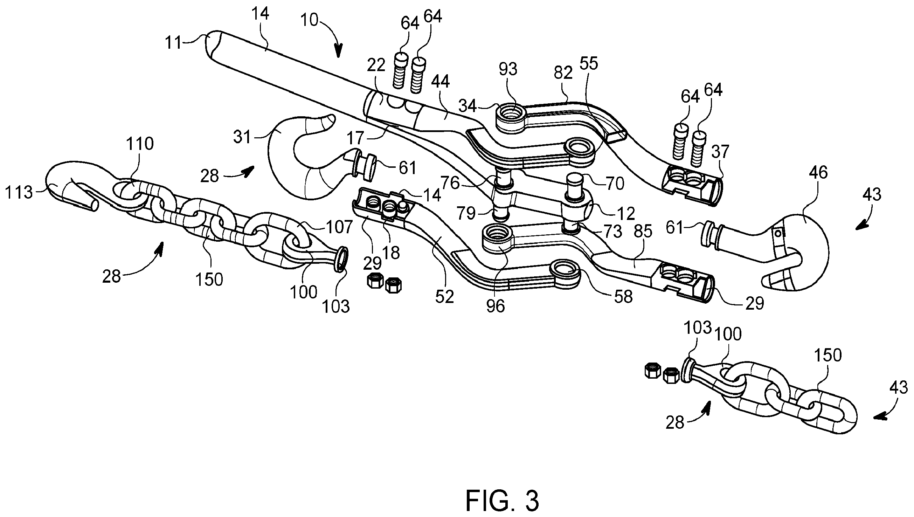

At the second end 22 of the first bifurcated arm 13, the arm members 49, 52 join together to form a cavity 29 (best shown in FIG. 3) for receiving a stud 61 on the end of the hook 31. The pair of arm members 49, 52 may coalesce to form a unitary structure in the form of the first bifurcated arm 13. The cavity 29 may be configured such that the stud 61 is fixedly attached to the first bifurcated arm 13 when the arms 49 and 52 are joined at end 22 and secured together by fasteners 64. A pair of threaded fasteners 64 may be used to connect the two arm members 49, 52 at the second end 22.

The bifurcated arm 13 may be provided with an interlocking feature whereby a tab 14 on one arm member 52 fits into an opening or recess 15 on the opposed arm member 49. A tab 17 may also be provided on arm member 49 to fit into a recess 18 on the opposed arm member 52. In this manner, the arm members 49, 52 may be interlocked for increased strength and better alignment.

In FIG. 3, an exploded view of the lever binder 6 shows the lever 10 at the center of the figure. The lever 10 has a first end 11 and a second end 12 disposed opposite from the first end 11. The lever 10 provides a handle 7 that may extend from a midportion of the lever 10 to the first end 11. A pair of trunnions 70 and 73 extend from opposite sides of the lever 10 near the second end 12. The trunnions 70, 73 are configured to be received through the openings 55, 58 in the pair of arms 49, 52 in the first bifurcated arm 13 to establish the first pivot point 25 (FIG. 1). The first trunnions 70, 73 may be provided with a cylindrical body portion 71, 72 and a cap 74, 75 that has a diameter that is greater than the diameter of the cylindrical body portion 71, 72.

A second pair of trunnions 76 and 79 are disposed on the lever 10 in spaced apart relation from the first pair of trunnions 70 and 73. The second pair of trunnions 76 and 79 are configured to be received through the openings 93, 96 in the pair of arms 82, 85 in the second bifurcated arm 16 to establish the pivot point 40 (FIG. 1). The second trunnions 76, 79 may be provided with a cylindrical portion 77, 78 and a cap 80, 81 that has a diameter that is greater than the diameter of the cylindrical body portion 77, 78.

The second bifurcated arm 16 has a pair of arm members 82 and 85. At a first end 34, the arm members 82 and 85 are disposed in spaced apart relation on opposite sides of the lever 10. At the second end 37, the arm members 82 and 85 are joined together by fasteners 64 to form a cavity 29 for receiving the stud 61 on the connection device 46. The second bifurcated arm 16 may also be provided with interlocks as described above in connection with the first bifurcated arm 13. The pair of arm members 82, 85 may also coalesce to form a unitary structure in the form of the second bifurcated arm 16.

As shown, the connection devices 28, 46 may include a direct connection to a hook 31, 46 having a stud 61 extending thereform. The stud 61 may be provided with a profile configured for being captured inside the cavities 29 formed in the first and second bifurcated arms 13, 16. Alternatively, as shown toward the bottom of the figure, an eyelet 100 may be configured with a stud 103 extending therefrom. The eyelet 100 may be secured in the cavity 29 formed in the first and second bifurcated arms 13, 16. A chain 150 may be attached to the eyelet 100 at a first end 107. The opposite end 110 of the chain 150 may be connected to a hook 113.

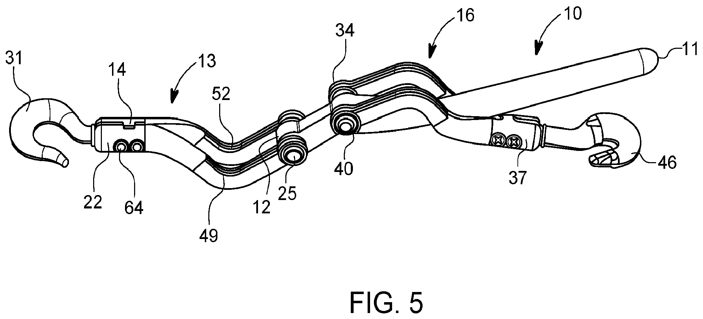

In use, the lever binder 6, may be placed in the open position shown in FIG. 5. For example, in this position the hooks 31, 46 at the opposite ends 22, 37 may be placed in the chains (not shown) between the load and the tie down on a trailer. Once the lever binder 6 is attached in the open position, the lever 10 may be pulled to the left with respect to FIG. 5. When the lever 10 is pulled to the left, the second pivot point 40 is configured to move in an arc centered about the first pivot point 25 as the lever 10 is moved from the open position of FIG. 5 to the binding position shown in FIG. 1.

The present invention contemplates that many changes and modifications may be made. Therefore, while the presently-preferred form of the multi-attachment lever binder has been shown and described, and several modifications and alternatives discussed, persons skilled in this art will readily appreciate that various additional changes and modifications may be made without departing from the invention, as defined and differentiated by the following claims.

## Claims

1. A multi-attachment lever binder (6), comprising:
a lever (10) having a first end (11) configured to provide a handle (7) and a second end (12) disposed opposite the first end (11);
a first bifurcated arm (13) having a first end (19) and a second end (22) disposed opposite from the first end (19), the first bifurcated arm (13) having a pair of arm members (49, 52) configured to pivotally mount on the outside of or on opposite sides of the lever (10) at the first end (19) to form a first pivot point (25) between the first bifurcated arm (13) and the lever (10), the pair of arm members (49, 52) configured to attach to a connection device (28) at the second end (22), the first bifurcated arm (13) curved or angled between the first end (19) and the second end (22);
a second bifurcated arm (16) having a first end (34) and a second end (37) disposed opposite from the first end (34), the arm (16) having a pair of arm members (82, 85) configured to pivotally mount on the outside of or on opposite sides of the lever (10) at the first end (34) to form a second pivot point (40) between the second bifurcated arm (16) and the lever (10), the pair of arm members (82, 85) configured to attach to a connection device (43) at the second end (37), the second bifurcated arm (16) curved or angled between the first end (34) and the second end (22);
wherein the second pivot point (40) is configured to move in an arc centered about the first pivot point (25) as the lever (10) is moved from an open position to a binding position,
wherein the pair of arm members (49, 52) of the first bifurcated arm (13) and/or the pair of arm members (82, 85) of the second bifurcated arm (16) are configured to attach at the respective second end (22, 37) to form a cavity (29) configured to receive an end portion of the respective connection device (28, 43).

2. The multi-attachment lever binder (6) of claim 1, wherein the lever (10) has a first pair of trunnions (70, 73) extending from opposite sides of the lever (10) toward the second end (12) and a second pair of trunnions (76, 79) extending from opposite sides of the lever (10) disposed in spaced apart relation to the first pair of trunnions (70, 73).

3. The multi-attachment lever binder (6) of claim 2, wherein the trunnions (70, 73, 76, 79) further comprise a cylindrical body portion (71, 72, 77, 78) and a cap (74, 75, 80, 81) having a diameter greater than a diameter of the cylindrical body portion (71, 72, 77, 78).

4. The multi-attachment lever binder (6) of claim 2, wherein each of the pair of arm members (49, 52) on the first bifurcated arm (13) has an opening (55, 58) at the first end (19) configured to mount on one of the first pair of trunnions (70, 73) on the lever (10) to form the first pivot point (25) where the first bifurcated arm attaches to the lever (10).

5. The multi-attachment lever binder (6) of claim 1, wherein the pair of arm members (49, 52, 82, 85) coalesce to form a unitary bifurcated structure.

6. The multi-attachment lever binder (6) of claim 2, wherein each of the pair of arm members (82, 85) on the second bifurcated arm (16) has an opening (93, 96) at the first end (34) configured to mount on one of the second pair of trunnions (76, 79) on the lever (10) to form the second pivot point (40) where the second bifurcated arm (16) attaches to the lever (10).

7. The multi-attachment lever binder (6) of Claim 1, wherein the pair of arms (49, 52) on the first bifurcated arm (13) pivotally mount on opposite sides of the lever (10); AND/OR
wherein the pair of arms (82, 85) on the second bifurcated arm (16) pivotally mount on opposite sides of the lever (10).

8. The multi-attachment lever binder (6) of Claim 1, wherein the pairs of arm members (49, 52, 82, 85) have cooperating tabs (14, 17) and openings or recesses (15, 18) configured to form an interlock between opposed arm members (49, 52, 82, 85).

9. The multi-attachment lever binder (6) of claim 1,
wherein the lever (10) having a first pair of trunnions (70, 73) extending from opposite sides of the lever (10) toward the second end (12) and a second pair of trunnions (76, 79) extending from opposite sides of the lever (10) disposed in spaced apart relation to the first pair of trunnions (70, 73);
each arm member (49, 52) of the first bifurcated arm (13) having an opening (55, 58) at the first end (19) configured to mount on one of the trunnions (70, 73) on the lever (10) to form the first pivot point (25) where the first bifurcated arm (13) attaches to the lever (10); and
each arm member (82, 85) of the second bifurcated arm (16) having an opening (93, 96) at the first end (34) configured to mount on one of the trunnions (76, 79) on the lever (10) to form the second pivot point (40) where the second bifurcated arm (16) attaches to the lever (10),

10. The multi-attachment lever binder (6) of claim 1 or 9, wherein the connection device (28, 43) is an eyelet (100) connected to a chain (150).

11. The multi-attachment lever binder (6) of Claim 10, wherein the chain (150) has a hook (113) connected thereto.

12. The multi-attachment lever binder (6) of claim 1, wherein each cavity (29) is configured to interchangeably receive the respective connection device (28, 43).

13. The multi-attachment lever binder (6) of claim 1, 9 or 12, wherein the connection device (28, 43) is a hook (31, 46) with a stud extending therefrom.

## Patentansprüche

1. Mehrfachbefestigungshebelbinder (6), umfassend:
einen Hebel (10), der ein erstes Ende (11), das konfiguriert ist, um einen Griff (7) bereitzustellen, und ein zweites Ende (12), das gegenüber dem ersten Ende (11) angeordnet ist, aufweist;
einen ersten gegabelten Arm (13), der ein erstes Ende (19) und ein zweites Ende (22), das gegenüber dem ersten Ende (19) angeordnet ist, aufweist, wobei der erste gegabelte Arm (13) ein Paar von Armelementen (49, 52) aufweist, die konfiguriert sind, um an der Außenseite oder an gegenüberliegenden Seiten des Hebels (10) an dem ersten Ende (19) schwenkbar montiert zu werden, um einen ersten Schwenkpunkt (25) zwischen dem ersten gegabelten Arm (13) und dem Hebel (10) auszubilden, wobei das Paar von Armelementen (49, 52) konfiguriert ist, um an einer Verbindungsvorrichtung (28) an dem zweiten Ende (22) befestigt zu werden, wobei der erste gegabelte Arm (13) zwischen dem ersten Ende (19) und dem zweiten Ende (22) gekrümmt oder abgewinkelt ist;
ein zweiter gegabelter Arm (16), der ein erstes Ende (34) und ein zweites Ende (37), das gegenüber dem ersten Ende (34) angeordnet ist, aufweist, wobei der Arm (16) ein Paar von Armelementen (82, 85) aufweist, die konfiguriert sind, um an der Außenseite oder an gegenüberliegenden Seiten des Hebels (10) an dem ersten Ende (34) schwenkbar montiert zu werden, um einen zweiten Schwenkpunkt (40) zwischen dem zweiten gegabelten Arm (16) und dem Hebel (10) auszubilden, wobei das Paar von Armelementen (82, 85) konfiguriert ist, um an einer Verbindungsvorrichtung (43) an dem zweiten Ende (37) befestigt zu werden, wobei der zweite gegabelte Arm (16) zwischen dem ersten Ende (34) und dem zweiten Ende (22) gekrümmt oder abgewinkelt ist;
wobei der zweite Schwenkpunkt (40) konfiguriert ist, um sich in einem Bogen, der m den ersten Schwenkpunkt (25) herum zentriert ist, zu bewegen, wenn der Hebel (10) von einer offenen Position in eine Bindeposition bewegt wird,
wobei das Paar von Armelementen (49, 52) des ersten gegabelten Arms (13) und/oder das Paar von Armelementen (82, 85) des zweiten gegabelten Arms (16) konfiguriert sind, um an dem jeweiligen zweiten Ende (22, 37) befestigt zu werden, um einen Hohlraum (29) auszubilden, der konfiguriert ist, um einen Endabschnitt der jeweiligen Verbindungsvorrichtung (28, 43) aufzunehmen.

2. Mehrfachbefestigungshebelbinder (6) nach Anspruch 1, wobei der Hebel (10) ein erstes Paar von Zapfen (70, 73), die sich von gegenüberliegenden Seiten des Hebels (10) in Richtung des zweiten Endes (12) erstrecken, und ein zweites Paar von Zapfen (76, 79), die sich von gegenüberliegenden Seiten des Hebels (10) erstrecken und in beabstandeter Beziehung zu dem ersten Paar von Zapfen (70, 73) angeordnet sind, aufweist.

3. Mehrfachbefestigungshebelbinder (6) nach Anspruch 2, wobei die Zapfen (70, 73, 76, 79) ferner einen zylindrischen Körperabschnitt (71, 72, 77, 78) und eine Kappe (74, 75, 80, 81) umfassen, die einen Durchmesser, der größer als ein Durchmesser des zylindrischen Körperabschnitts (71, 72, 77, 78) ist, aufweist.

4. Mehrfachbefestigungshebelbinder (6) nach Anspruch 2, wobei jedes des Paars von Armelementen (49, 52) an dem ersten gegabelten Arm (13) eine Öffnung (55, 58) an dem ersten Ende (19) aufweist, die konfiguriert ist, um an einem des ersten Paars von Zapfen (70, 73) an dem Hebel (10) montiert zu werden, um den ersten Schwenkpunkt (25) auszubilden, wo der erste gegabelte Arm an dem Hebel (10) befestigt ist.

5. Mehrfachbefestigungshebelbinder (6) nach Anspruch 1, wobei sich das Paar von Armelementen (49, 52, 82, 85) vereinigt, um eine einheitliche gegabelte Struktur auszubilden.

6. Mehrfachbefestigungshebelbinder (6) nach Anspruch 2, wobei jedes des Paars von Armelementen (82, 85) an dem zweiten gegabelten Arm (16) eine Öffnung (93, 96) an dem ersten Ende (34) aufweist, die konfiguriert ist, um an einem des zweiten Paars von Zapfen (76, 79) an dem Hebel (10) montiert zu werden, um den zweiten Schwenkpunkt (40) auszubilden, wo der zweite gegabelte Arm (16) an dem Hebel (10) befestigt ist.

7. Mehrfachbefestigungshebelbinder (6) nach Anspruch 1, wobei das Paar von Armen (49, 52) an dem ersten gegabelten Arm (13) an gegenüberliegenden Seiten des Hebels (10) schwenkbar montiert ist; UND/ODER
wobei das Paar von Armen (82, 85) an dem zweiten gegabelten Arm (16) auf gegenüberliegenden Seiten des Hebels (10) schwenkbar montiert ist.

8. Mehrfachbefestigungshebelbinder (6) nach Anspruch 1, wobei die Paare von Armelementen (49, 52, 82, 85) zusammenwirkende Laschen (14, 17) und Öffnungen oder Aussparungen (15, 18) aufweisen, die konfiguriert sind, um eine Verriegelung zwischen gegenüberliegenden Armelementen (49, 52, 82, 85) auszubilden.

9. Mehrfachbefestigungshebelbinder (6) nach Anspruch 1,
wobei der Hebel (10) ein erstes Paar von Zapfen (70, 73), die sich von gegenüberliegenden Seiten des Hebels (10) in Richtung des zweiten Endes (12) erstrecken, und ein zweites Paar von Zapfen (76, 79), die sich von gegenüberliegenden Seiten des Hebels (10) erstrecken und in beabstandeter Beziehung zu dem ersten Paar von Zapfen (70, 73) angeordnet sind, aufweist;
wobei jedes Armelement (49, 52) des ersten gegabelten Arms (13) eine Öffnung (55, 58) an dem ersten Ende (19) aufweist, die konfiguriert ist, um an einem der Zapfen (70, 73) an dem Hebel (10) montiert zu werden, um den ersten Schwenkpunkt (25) auszubilden, wo der erste gegabelte Arm (13) an dem Hebel (10) befestigt ist; und
jedes Armelement (82, 85) des zweiten gegabelten Arms (16) eine Öffnung (93, 96) an dem ersten Ende (34) aufweist, die konfiguriert ist, um an einem der Zapfen (76, 79) an dem Hebel (10) montiert zu werden, um den zweiten Schwenkpunkt (40) auszubilden, wo der zweite gegabelte Arm (16) an dem Hebel (10) befestigt ist,

10. Mehrfachbefestigungshebelbinder (6) nach Anspruch 1 oder 9, wobei die Verbindungsvorrichtung (28, 43) eine Öse (100) ist, die mit einer Kette (150) verbunden ist.

11. Mehrfachbefestigungshebelbinder (6) nach Anspruch 10, wobei die Kette (150) einen Haken (113), der damit verbunden ist, aufweist.

12. Mehrfachbefestigungshebelbinder (6) nach Anspruch 1, wobei jeder Hohlraum (29) konfiguriert ist, um die jeweilige Verbindungsvorrichtung (28, 43) austauschbar aufzunehmen.

13. Mehrfachbefestigungshebelbinder (6) nach Anspruch 1, 9 oder 12, wobei die Verbindungsvorrichtung (28, 43) ein Haken (31, 46) mit einem sich davon erstreckenden Bolzen ist.

## Revendications

1. Tendeur à levier à fixations multiples (6), comprenant :
un levier (10) ayant une première extrémité (11) conçue pour former une poignée (7) et une seconde extrémité (12) disposée à l'opposé de la première extrémité (11) ;
un premier bras bifurqué (13) ayant une première extrémité (19) et une seconde extrémité (22) disposée à l'opposé de la première extrémité (19), le premier bras bifurqué (13) ayant une paire d'éléments de bras (49, 52) conçus pour être montés de manière pivotante sur l'extérieur ou sur des côtés opposés du levier (10) au niveau de la première extrémité (19) pour former un premier point de pivotement (25) entre le premier bras bifurqué (13) et le levier (10), la paire d'éléments de bras (49, 52) étant conçus pour être fixés à un dispositif de liaison (28) au niveau de la seconde extrémité (22), le premier bras bifurqué (13) étant courbé ou coudé entre la première extrémité (19) et la seconde extrémité (22) ;
un second bras bifurqué (16) ayant une première extrémité (34) et une seconde extrémité (37) disposée à l'opposé de la première extrémité (34), le bras (16) ayant une paire d'éléments de bras (82, 85) conçus pour être montés de manière pivotante à l'extérieur ou sur des côtés opposés du levier (10) au niveau de la première extrémité (34) pour former un second point de pivotement (40) entre le second bras bifurqué (16) et le levier (10), la paire d'éléments de bras (82, 85) étant conçue pour être fixés à un dispositif de liaison (43) au niveau de la seconde extrémité (37), le second bras bifurqué (16) étant courbé ou coudé entre la première extrémité (34) et la seconde extrémité (22) ;
dans lequel le second point de pivotement (40) est conçu pour se déplacer suivant un arc centré sur le premier point de pivotement (25) lorsque le levier (10) est déplacé d'une position ouverte à une position de serrage,
dans lequel la paire d'éléments de bras (49, 52) du premier bras bifurqué (13) et/ou la paire d'éléments de bras (82, 85) du second bras bifurqué (16) sont conçus pour être fixés au niveau de la seconde extrémité (22, 37) respective afin de former une cavité (29) conçue pour recevoir une partie d'extrémité du dispositif de liaison (28, 43) respectif.

2. Tendeur à levier à fixations multiples (6) selon la revendication 1, dans lequel le levier (10) a une première paire de tourillons (70, 73) s'étendant à partir de côtés opposés du levier (10) vers la seconde extrémité (12) et une seconde paire de tourillons (76, 79) s'étendant à partir de côtés opposés du levier (10) disposée de manière espacée par rapport à la première paire de tourillons (70, 73).

3. Tendeur à levier à fixations multiples (6) selon la revendication 2, dans lequel les tourillons (70, 73, 76, 79) comprennent en outre une partie de corps cylindrique (71, 72, 77, 78) et un capuchon (74, 75, 80, 81) ayant un diamètre supérieur à un diamètre de la partie de corps cylindrique (71, 72, 77, 78).

4. Tendeur à levier à fixations multiples (6) selon la revendication 2, dans lequel chaque élément de la paire d'éléments de bras (49, 52) sur le premier bras bifurqué (13) a une ouverture (55, 58) au niveau de la première extrémité (19) conçue pour être montée sur l'un de la première paire de tourillons (70, 73) sur le levier (10) pour former le premier point de pivotement (25) où le premier bras bifurqué se fixe au levier (10).

5. Tendeur à levier à fixations multiples (6) selon la revendication 1, dans lequel la paire d'éléments de bras (49, 52, 82, 85) s'unit pour former une structure bifurquée d'un seul tenant.

6. Tendeur à levier à fixations multiples (6) selon la revendication 2, dans lequel chaque élément de la paire d'éléments de bras (82, 85) sur le second bras bifurqué (16) a une ouverture (93, 96) au niveau de la première extrémité (34) conçue pour être montée sur l'un de la seconde paire de tourillons (76, 79) sur le levier (10) pour former le second point de pivotement (40) où le second bras bifurqué (16) se fixe au levier (10).

7. Tendeur à levier à fixations multiples (6) selon la revendication 1, dans lequel la paire de bras (49, 52) sur le premier bras bifurqué (13) est montée de manière pivotante sur des côtés opposés du levier (10) ; ET/OU
dans lequel la paire de bras (82, 85) sur le second bras bifurqué (16) est montée de manière pivotante sur des côtés opposés du levier (10).

8. Tendeur à levier à fixations multiples (6) selon la revendication 1, dans lequel les paires d'éléments de bras (49, 52, 82, 85) ont des pattes (14, 17) et des ouvertures ou évidements (15, 18) coopérants conçus pour former un emboîtement entre des éléments de bras (49, 52, 82, 85) opposés.

9. Tendeur à levier à fixations multiples (6) selon la revendication 1,
dans lequel le levier (10) a une première paire de tourillons (70, 73) s'étendant à partir de côtés opposés du levier (10) vers la seconde extrémité (12) et une seconde paire de tourillons (76, 79) s'étendant à partir de côtés opposés du levier (10) disposée de manière espacée de la première paire de tourillons (70, 73) ;
chaque élément de bras (49, 52) du premier bras bifurqué (13) ayant une ouverture (55, 58) au niveau de la première extrémité (19) conçue pour être montée sur l'un des tourillons (70, 73) sur le levier (10) pour former le premier point de pivotement (25) où le premier bras bifurqué (13) se fixe au levier (10) ; et
chaque élément de bras (82, 85) du second bras bifurqué (16) ayant une ouverture (93, 96) au niveau de la première extrémité (34) conçue pour être montée sur l'un des tourillons (76, 79) sur le levier (10) pour former le second point de pivotement (40) où le second bras bifurqué (16) se fixe au levier (10),

10. Tendeur à levier à fixations multiples (6) selon la revendication 1 ou 9, dans lequel le dispositif de liaison (28, 43) est un œillet (100) relié à une chaîne (150).

11. Tendeur à levier à fixations multiples (6) selon la revendication 10, dans lequel la chaîne (150) a un crochet (113) relié à celle-ci.

12. Tendeur à levier à fixations multiples (6) selon la revendication 1, dans lequel chaque cavité (29) est conçue pour recevoir de manière interchangeable le dispositif de liaison (28, 43) respectif.

13. Tendeur à levier à fixations multiples (6) selon la revendication 1, 9 ou 12, dans lequel le dispositif de liaison (28, 43) est un crochet (31, 46) avec un tenon s'étendant à partir de celui-ci.
